# FASCICULE DE BREVET EUROPEEN

(11) **EP 0 820 081 B1**
(45) Date de publication et mention de la délivrance du brevet: **07.04.2004**
(21) Numéro de dépôt: 97401696.6
(22) Date de dépôt: 15.07.1997
(51) Int. Cl.: H01H 9/56, H01H 9/16

(54) **Procédé de protection de défaillance d'un disjoncteur**
Verfahren zum Schutz gegen Versagen eines Schutzschalters
Process for protecting against the failure of a circuit breaker

(30) Priorité: 18.07.1996 FR 9609012
(43) Date de publication de la demande: 21.01.1998
(73) Titulaire: Alstom T & D SA, 75116 Paris (FR)
(72) Inventeur: Marmonier, Jean, 73100 Aix Les Bains (FR); Lefort, Hervé, 34280 La Grande Motte (FR)
(74) Mandataire: de Lambilly Delorme, Marie Pierre

(56) Documents cités:
- EP-A- 0 538 109
- US-A- 5 267 120

## Description

La présente invention se rapporte à un procédé de protection de défaillance d'un disjoncteur, en particulier d'un disjoncteur haute tension.

Elle concerne plus précisément un procédé de protection de défaillance d'un disjoncteur pourvu de contacts pouvant se déplacer d'une position de fermeture à une position d'ouverture et inversement et équipé d'un dispositif de protection comportant un dispositif de détection d'un défaut entraînant la mise en fonction d'une bobine électromagnétique d'ouverture actionnant un dispositif de manoeuvre des contacts du disjoncteur, des contacts de signalisation de position d'un dispositif de contrôle étant basculés dès le déplacement des contacts du disjoncteur.

Des exemples de dispositif de manoeuvre des contacts d'un disjoncteur sont décrits dans les documents de brevet EP-0 221 430 et EP538109. Un tel dispositif de manoeuvre est associé à un dispositif de contrôle où, à l'aide de contacts de signalisation de position, la position des contacts du disjoncteur est surveillé.

Les procédés de protection de défaillance de disjoncteur connus consistent à réaliser une temporisation lors de l'émission d'un ordre d'ouverture de la bobine électromagnétique d'ouverture du disjoncteur, actionnée en cas de détection d'un défaut, et à vérifier si le courant est nul après cette temporisation. S'il l'est, la coupure s'est effectuée sans problème; s'il ne l'est pas, une alarme de défaillance est générée et des disjoncteurs adjacents au disjoncteur défaillant sont manoeuvrés. Cette temporisation est généralement de l'ordre de 150 ms à 200 ms et permet de surveiller une éventuelle défaillance de la bobine, de l'ensemble du système d'initialisation de la manoeuvre du disjoncteur et des contacts haute tension mobiles du disjoncteur en soi.

Cette temporisation est réglée avec une marge importante pour éviter qu'elle ne se termine avant la coupure du courant de défaut en cas de fonctionnement lent du disjoncteur comme il sera précisé plus loin.

Ce procédé présente une sécurité importante mais nécessite un délai relativement important avant mise en route de l'alarme de défaillance, en cas de défaut.

L'invention propose un procédé de protection de défaillance plus rapide pouvant être associée à ce procédé connu.

Pour ce faire, en cas de détection d'un défaut, une temporisation est générée après basculement des contacts de signalisation, à la fin de laquelle il est vérifié si le courant de défaut est annulé et s'il ne l'est pas, une alarme est générée. Cette alarme est avantageusement un signal "défaillance disjoncteur".

L'avantage de ce procédé de protection de défaillance est la réduction importante du temps d'élimination du défaut en cas de défaillance de coupure du disjoncteur, ce qui permet une meilleure stabilité du réseau.

De façon optimale, ladite temporisation est supérieure ou égale à la somme du temps entre le basculement des contacts de signalisation de position et la séparation des contacts du disjoncteur en position d'ouverture et du temps d'arc maximal admissible.

Le temps d'arc admissible est un temps d'arc défini en fonction du disjoncteur. Si le disjoncteur n'a pas coupé le courant à ce temps admissible, le disjoncteur est estimé inapte à le couper ultérieurement.

L'invention est décrite ci-après plus en détail à l'aide de figures ne représentant qu'un mode de réalisation préféré de l'invention.

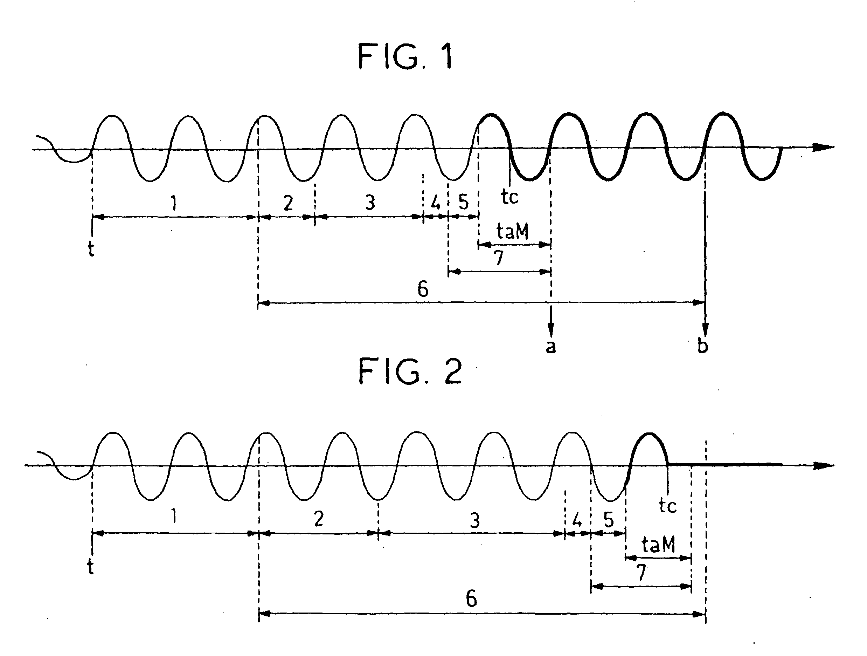

Les figures 1 et 2 sont deux graphes illustrant le procédé conforme à l'invention.

Sur ces figures est représenté le courant en fonction du temps. La figure 1 correspond à un temps de fonctionnement normal du disjoncteur et à une non coupure du courant de défaut. La figure 2 correspond à un temps de fonctionnement lent du disjoncteur et à une coupure correcte du courant de défaut.

A l'apparition d'un défaut à l'instant t, un délai 1 est nécessaire pour que ce défaut soit détecté par le dispositif de protection. Ce dispositif entraîne l'actionnement d'une bobine électromagnétique d'ouverture du disjoncteur qui met un temps 2 à s'actionner et dont l'électroaimant actionne le dispositif de manoeuvre des contacts du disjoncteur qui rentre en fonction après un délai 3. Les contacts du disjoncteur commencent à se déplacer et les contacts de signalisation de position du dispositif de contrôle sont basculés après un délai 4. Les contacts du disjoncteur sont séparés ensuite en position d'ouverture après un temps 5.

Le procédé de protection de défaillance classique consiste à générer une temporisation 6 lors de l'actionnement de la bobine. Cette temporisation est généralement de l'ordre de 150 à 200 ms et à l'instant b vérifie si le courant est nul ou non.

Selon le cas représenté sur la figure 1, ce courant n'est pas nul. Le courant de défaut n'étant pas coupé, un signal "défaillance disjoncteur" est généré et des mesures de sécurité sont prises, en général le déclenchement de disjoncteurs adjacents.

Selon le cas représenté sur la figure 2, le courant de défaut est coupé à l'instant b. Le disjoncteur a fonctionné correctement.

La temporisation 6 prenant en compte un possible fonctionnement lent du disjoncteur comme représenté sur la figure 2, fonctionnement lent du à des retards entre l'ordre d'ouverture et le déplacement des contacts du disjoncteur à cause par exemple d'une absence prolongée de manoeuvre ou du froid ou d'une tension d'alimentation des bobines faible, un délai relativement important existe entre la séparation des contacts du disjoncteur et l'instant d'alarme b en cas de fonctionnement normal.

Conformément à l'invention une protection que l'on peut appeler protection accélérée est installée.

Selon ce procédé de protection, une temporisation 7 est générée après basculement des contacts de signalisation, c'est-à-dire à la fin du temps 4. A la fin de cette temporisation, à l'instant a, il est vérifié si le courant de défaut est annulé. Cette temporisation 7 est supérieure ou égale à la somme du temps 5 entre le basculement des contacts et la séparation des contacts du disjoncteur en position d'ouverture et du temps d'arc maximal admissible taM.

Ce procédé permet d'effectuer une surveillance de la coupure avec une temporisation beaucoup plus fine que celle du procédé classique. L'instant d'alarme a lieu dans un délai d'environ 10 ms après l'instant théorique de coupure tc du courant au lieu de 50 ms dans le cas du protection de détection classique.

Cette temporisation après basculement des contacts de signalisation de position peut être réglée à une valeur faible, sans marge de sécurité importante, car le temps 5 entre ce basculement et la séparation des contacts du disjoncteur en position d'ouverture est pratiquement constant, les contacts de signalisation étant à action positive, et la dispersion des vitesses de séparation après la mise en vitesse des contacts est faible.

Avantageusement, ce procédé de protection est associé à un procédé de protection classique assurant la protection en cas de disfonctionnement de la bobine électromagnétique d'ouverture.

## Revendications

1. Procédé de protection de défaillance d'un disjoncteur pourvu de contacts pouvant se déplacer d'une position de fermeture à une position d'ouverture et inversement et équipé d'un dispositif de protection comportant un dispositif de détection d'un défaut entraînant la mise en fonction d'une bobine électromagnétique d'ouverture actionnant un dispositif de manoeuvre des contacts du disjoncteur, des contacts de signalisation de position d'un dispositif de contrôle étant basculés dès le déplacement des contacts du disjoncteur, en cas de détection d'un défaut, une temporisation (7) étant générée après basculement des contacts de signalisation, **caractérisé en ce que** ladite temporisation est supérieure ou égale à la somme d'un temps (5) escompté entre le basculement des contacts de signalisation de position et la séparation des contacts du disjoncteur en position d'ouverture et d'un temps d'arc maximal admissible (TaM), et **en ce qu'**il est vérifié à la fin de ladite temporisation (7) si le courant de défaut est annulé afin de générer une alarme dans le cas contraire.

## Patentansprüche

1. Ausfallschutzverfahren für Trennschalter, der mit Kontakten, die sich aus einer geschlossenen Stellung in eine geöffnete Stellung und umgekehrt bewegen können, versehen und mit einer Schutzvorrichtung ausgerüstet ist, die eine Fehlererfassungsvorrichtung enthält, die eine elektromagnetische Stromkreisöffnungsspule in Betrieb setzt, die ihrerseits eine Vorrichtung zur Betätigung der Kontakte des Trennschalters bewirkt, wobei Stellungssignalisierungskontakte einer Steuervorrichtung gekippt werden, sobald sich die Kontakte des Trennschalters bewegen, und wobei bei Erfassung eines Fehlers nach dem Kippen der Signalisierungskontakte eine Verzögerung (7) erzeugt wird, **dadurch gekennzeichnet, dass** die Verzögerung größer oder gleich der Summe aus einer Zeit (5), die zwischen dem kippen der Stellungssignalisierungskontakte und der Trennung der Kontakte des Trennschalters in die geöffnete Stellung erwartet wird, und aus einer maximal zulässigen Lichtbogendauer (TaM) ist und dass am Ende der Verzögerung (7) geprüft wird, ob der Fehlerstrom auf null gesetzt worden ist, um andernfalls einen Alarm zu erzeugen.

## Claims

1. A method of protecting against circuit breaker failure, said circuit breaker having contacts capable of moving between a closed position and an open position, and vice versa, and being fitted with protection apparatus including fault detector apparatus for putting into operation an opening electromagnetic coil that actuates circuit breaker contact drive apparatus, with position-indicator contacts of monitor apparatus being changed over as soon as the circuit breaker contacts start to move, a time delay (7) being generated from the indicator contacts changing over in the event of a fault being detected, the method being **characterized in that** said time delay is greater than or equal to the sum of the time (5) expected between the position-indicator contacts changing over and the circuit breaker contacts separating in the open position, plus the maximum acceptable arcing time (taM), and **in that**, at the end of said time delay (7), it is verified whether the fault current has become zero, so as to generate an alarm if this is not the case.
